Europäisches Patentamt

European Patent Office

Office européen des brevets

(19)

(11) **EP 1 448 006 A2**

(12) **EUROPEAN PATENT APPLICATION**

(43) Date of publication:
18.08.2004 Bulletin 2004/34

(51) Int Cl.⁷: **H04Q 7/36**

(21) Application number: **04075437.6**

(22) Date of filing: **12.02.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **13.02.2003 IL 15445903**

(71) Applicant: **Witcom ltd.**
**20692 Yokneam Illit (IL)**

(72) Inventor: **Czys, Baruch**
**Kiryat Motzkin 26418 (IL)**

(74) Representative: **Mittler, Enrico et al**
**Mittler & C. s.r.l.,**
**Viale Lombardia, 20**
**20131 Milano (IT)**

(54) **Wireless network with intensive frequency reuse**

(57)    A node (40) in a wireless network (20) includes at least first and second directional antennas (32,34), which are directed toward other nodes in the network. Signal generation circuitry (41) at the node receives first and second streams of digital information to be conveyed to the other nodes, and combines the streams so as to generate outgoing signals for transmission by the first and second directional antennas, while suppressing interference between the transmitted signals. Additionally or alternatively, processing circuitry (45) at the node receives first and second receiver inputs from the antennas, due to reception of incoming signals by the antennas from the other nodes, and combines the inputs so as to extract data streams therefrom while suppressing interference between the received signals.

FIG. 2

**Description**

**FIELD OF THE INVENTION**

The present invention relates generally to wireless communications, and specifically to methods and systems for frequency reuse in wireless networks.

**BACKGROUND OF THE INVENTION**

Wireless backhaul networks are commonly used for trunking between network access points and switches, as well as among the switches themselves. For example, in a cellular network, wireless backhaul links may connect base transmission stations (BTS) to base station controllers (BSC), and may similarly connect BSCs to the mobile switching center (MSC). These wireless links may make up the entire backhaul network, or they may alternatively be used in conjunction with high-speed terrestrial links. A variety of different backhaul network topologies are known in the art, including ring, star and mesh topologies.

Wireless links in a backhaul network are typically implemented using directional microwave antennas, over line-of-sight paths between the nodes. Generally, for each wireless link between a pair of nodes, each of the nodes has at least one antenna that is aimed toward the other node in the pair. (For purposes of beam forming and spatial diversity, as are known in the art, each node may actually use multiple antennas for each of its links.) Interference between different links must typically be held below some predefined level. When the line-of-sight paths of different links are far apart in angle, the directional properties of the antennas can provide the required interference rejection even when the links operate on the same frequency. On the other hand, for links that are close in angle, it is often necessary to use different frequencies in order to avoid excessive interference. In view of the high cost and limited availability of communication bandwidth, it is generally desirable to minimize the number of different frequencies that must be used.

Methods for enhancing frequency reuse in wireless communications are known in the art. For example, U.S. Patent 6,008,760, whose disclosure is incorporated herein by reference, describes a microwave communications system in which interferometric beam-narrowing is used to cancel co-channel interference and transmitter leakage. Frequency-dependent beam-shaping compensates for frequency-dependent distortions of the beam pattern, thereby improving bandwidth and frequency reuse.

Adaptive cancellation can also be used to increase channel capacity in wireless communication networks. For example, U.S. Patent 6,289,004, whose disclosure is incorporated herein by reference, describes an adaptive interference canceller system, which cancels the effects of known, fixed interference sources in signals that it receives. The system includes a main antenna for receiving signals from other communication stations and one or more directional antennas, which are directed toward interference sources. The adaptive canceller weights the signals received by the directional antennas and sums the weighted signals to produce a cancellation signal. The cancellation signal is subtracted from the signal received by the main antenna to provide an output that is said to be substantially free from the interference generated by the known interference sources.

**SUMMARY OF THE INVENTION**

Embodiments of the present invention provide methods and systems of signal processing for suppressing interference among different links in wireless networks. These methods and systems enable enhanced frequency reuse among the different links.

In embodiments of the present invention, at least one node in a communication network has multiple wireless links connecting it to other nodes in the network. The node comprises multiple antennas, each of which is associated with a. respective link. Typically, the links are line-of-sight radio links, and the antennas are directional antennas, each of which is aimed toward a corresponding antenna at the other end of the respective link. The node further comprises signal processing circuitry, which combine the signals transmitted and received by the different antennas in order to cancel interference between the different links. Two complementary methods are used for interference cancellation:

- On the receiving side, the processing circuitry compares the signals received over the air by the different antennas in order to generate a corrected signal for each link, in which the interfering components from other links are suppressed. Typically, the receiver circuits use an adaptive procedure to determine receiver processing coefficients, based on the actual interference between the links. These coefficients are then applied to the signals received on all the different antennas together so as to cancel the interference in each of the signals.
- On the transmitting side, the processing circuitry combines the input signals to be transmitted through the different antennas so as to generate modified signals for transmission. The signals are modified in such a way that at the destination node of any given transmitting antenna, the interfering components due to the signals transmitted by the other antennas are substantially canceled out. A training procedure may be used, in conjunction with the receivers at the destination nodes, in order to estimate the mutual interference between the links. The interference estimate is then used to determine signal generation coefficients, which are applied by the transmitter in order to generate the modified signals.

The methods of the present invention enable cancellation of interference even between links that are close together in angle. Therefore, neighboring antennas can use the same frequency band, unlike systems known in the art, and it is typically possible for all the links over which a given node receives or transmits signals to operate in the same frequency band. (For frequency division duplex (FDD) operation, it may be desirable to use one band at each node for transmission and a different band for reception.) This enhancement of frequency reuse can be achieved substantially without modification to existing antenna infrastructure, simply by applying the signal processing methods provided by the present invention.

Frequency reuse schemes based on the present invention may be employed in various different network topologies, including ring, mesh, star and other types of point-to-multipoint networks. Embodiments of the present invention are particularly useful in reducing the bandwidth requirements of wireless networks in which the positions of the nodes are fixed, such as in backhaul networks, for example. The principles of the present invention, however, may be applied in substantially any sort of radio communication network.

There is therefore provided, in accordance with an embodiment of the present invention, a receiver for use in a wireless network, including:

a first antenna, which is adapted to be directed toward a first transmitter positioned in a first location and transmitting a first signal carrying a first stream of digital information;
a second antenna, which is adapted to be directed toward a second transmitter positioned in a second location, separated from the first location, and transmitting a second signal carrying a second stream of digital information; and
processing circuitry, which is coupled to receive first and second receiver inputs from the first and second antennas, respectively, due to reception of the first and second signals by the antennas, and which is adapted to combine the first and second receiver inputs so as to extract at least the first stream of digital information from the receiver inputs while suppressing at least a first interference due to reception of the second signal by the first antenna.

Typically, the first and second signals are transmitted in a common frequency channel.

The processing circuitry may be further adapted to extract the second stream of digital information from the receiver inputs while suppressing a second interference due to the reception of the first signal by the second antenna.

In one aspect of the present invention, the processing circuitry is adapted to estimate an error in the extracted stream of digital information, to determine coefficients in response to the estimated error, and to apply the coefficients to the first and second receiver inputs in order to suppress the interference. Typically, the processing circuit is adapted to determine the coefficients so as to minimize a mean square of the error. Additionally or alternatively, the processing circuitry is adapted to adjust the coefficients adaptively, in response to a change in a channel transfer function between at least one of the first and second transmitters and at least one of the first and second antennas.

In an embodiment of the invention, the first and second signals include multi-carrier signals, and the processing circuitry is adapted to divide the first and second receiver inputs into multiple frequency components, and to determine the coefficients to be applied individually to each of the frequency components.

In an alternatively embodiment, the first and second signals includes single-carrier signals, and wherein the processing circuitry includes a tap-delay channel equalizer.

In some embodiments, the receiver includes a plurality of N antennas, including the first and second antennas, and the processing circuitry is adapted to combine the receiver inputs from the N antennas so as to extract the first stream of digital information while suppressing up to N-1 interferers, including the first interference. The N-1 interferers may include at least one interference source that is not a transmitter in the wireless network.

There is also provided, in accordance with an embodiment of the present invention, a transmitter for use in a wireless network, including:

a first antenna, which is adapted to be directed toward a first receiver positioned in a first location;
a second antenna, which is adapted to be directed toward a second receiver positioned in a second location, separated from the first location; and
signal generation circuitry, which is coupled to receive first and second streams of digital information to be conveyed to the first and second receivers, respectively, and which is adapted to combine the first and second streams of digital information so as to generate first and second signals for transmission respectively by the first and second antennas, such that at least a first interference due to the transmission of the second signal is suppressed at the first receiver.

Typically, the signal generation circuit is adapted to generate the first and second signals for transmission in a common frequency channel.

The signal generation circuitry may be further adapted to generate the first and second signals so that a second interference associated with the transmission of the first signal is suppressed at the second receiver.

In an aspect of the present invention, the signal generation circuitry is adapted to determine a channel transfer function between the first and second antennas and at least one of the first and second receivers, to determine coefficients based on the channel transfer function, and to apply the coefficients to the first and second streams of digital information in order to generate the first and second signals so as to suppress the interference. Typically, the signal generation circuitry is adapted to generate training signals for transmission to the first and second receivers, for use in determining the channel transfer function. The transmitter may include a return channel receiver, for receiving data associated with the coefficients from the first and second receivers in response to reception of the training signals at the first and second receivers.

In an embodiment of the invention, the first and second signals include multi-carrier signals, and the signal generation circuitry is adapted to generate multiple frequency components of the signals, and to determine the coefficients to be applied individually to each of the frequency components.

In an alternative embodiment, the first and second signals include single-carrier signals, and wherein the signal generation circuitry includes a tap-delay channel pre-equalizer.

In some embodiments, the transmitter includes a plurality of M antennas, including the first and second antennas, and the signal generation circuitry is adapted to combine up to M streams of digital information so as to generate up to M signals for transmission respectively by the M antennas, such that up to M-1 interferers due to the transmission of the up to M signals, including the first interference, are suppressed at the first receiver.

There is additionally provided, in accordance with an embodiment of the present invention, communication apparatus for use in a wireless network, including:

a first directional antenna, which is adapted to be directed toward a first remote antenna of a first node in a first location in the network;

a second directional antenna, which is adapted to be directed toward a second remote antenna of a second node in a second location in the network, separated from the first location;

signal generation circuitry, which is coupled to receive first and second streams of digital information to be conveyed to the first and second nodes, respectively, and which is adapted to combine the first and second streams of digital information so as to generate first and second outgoing signals for transmission respectively by the first and second directional antennas, such that at least a first interference due to the transmission of the second outgoing signal is suppressed at the first remote antenna; and

processing circuitry, which is coupled to receive first and second receiver inputs from the first and second directional antennas, respectively, due to reception of first and second incoming signals by the antennas from the first and second nodes, respectively, and which is adapted to combine the first and second receiver inputs so as to extract a data stream from the receiver inputs while suppressing at least a second interference due to reception of the second incoming signal by the first directional antenna.

There is moreover provided, in accordance with an embodiment of the present invention, a wireless communication network, including a plurality of nodes, which include at least first and second nodes,

wherein each of the first and second nodes includes a respective first antenna, such that the first antenna of the first node is directed to transmit a first signal toward the second node, and the first antenna of the second node is directed toward the first node so as to receive the first signal, and wherein at least the first node includes a respective second antenna, which is directed toward another of the nodes in the network, and

wherein the first node includes signal generation circuitry, which is coupled to receive a first stream of digital information to be conveyed to the second node and a second stream of digital information to be conveyed to another of the nodes, and

wherein the signal generation circuitry is adapted to combine the first and second streams of digital information so as to generate the first signal and to generate a second signal for transmission by the second antenna of the first node, such that at least a first interference due to the transmission of the second signal is suppressed at the second node.

Typically, the second node includes a respective second antenna and processing circuitry, which is coupled to receive first and second receiver inputs from the first and second antennas of the second node, respectively, due to reception by the antennas of the second node of the first signal and of at least a third signal transmitted from another of the nodes in the network, and the processing circuitry is adapted to combine the first and second receiver inputs so as to extract at least the first stream of digital information from the receiver inputs while suppressing at least a second interference due to reception of the third signal by the first antenna of the second node. The first and second nodes may be adapted to suppress at least the first and second interferences substantially without dependence on synchronization between the nodes in the network.

In an embodiment of the invention, at least a first subset of the nodes are arranged in a ring topology. At least one of the nodes in the first subset may be connected by a wireless link to another one of the nodes in a second subset of the nodes, which are not a part of the ring topology of the first subset.

In another embodiment, the nodes are arranged in a mesh topology.

In still another embodiment, the nodes are arranged in a star topology, and the first node is located at a hub of the star topology. The signal generation circuitry may be adapted to generate the first and second signals in accordance with a multiplexing scheme, so that multiple nodes in the network, including the second node, are served by the first antenna of the first node. The multiplexing scheme is typically selected from a group of schemes consisting of TDMA and CDMA.

There is furthermore provided, in accordance with an embodiment of the present invention, a wireless communication network, including a plurality of nodes, which include at least first and second nodes,

wherein each of the first and second nodes includes a respective first antenna, such that the first antenna of the first node is directed to transmit a first signal carrying a first stream of digital information toward the second node, and the first antenna of the second node is directed toward the first node so as to receive the first signal, and wherein at least the second node includes a second antenna, which is directed toward another of the nodes in the network, and

wherein the second node includes processing circuitry, which is coupled to receive first and second receiver inputs from the first and second antennas of the second node, respectively, due to reception by the antennas of the second node of the first signal and of at least a second signal transmitted from another of the nodes in the network, and

wherein the processing circuitry is adapted to combine the first and second receiver inputs so as to extract at least the first stream of digital information from the receiver inputs while suppressing at least a first interference due to reception of the second signal by the first antenna of the second node.

In an embodiment of the invention, the nodes are arranged in a star topology, and the second node is located at a hub of the star topology. The processing circuitry may be adapted to receive the first and second receiver inputs in accordance with a multiplexing scheme, so that multiple nodes in the network, including the first node, are served by the first antenna of the second node, wherein the multiplexing scheme is typically selected from a group of schemes consisting of TDMA, CDMA and ALOHA.

There is also provided, in accordance with an embodiment of the present invention, in a wireless network, in which a receiving node has a first antenna directed toward a first transmitter positioned in a first location and transmitting a first signal carrying a first stream of digital information, and a second antenna directed toward a second transmitter positioned in a second location, separated from the first location, and transmitting a second signal carrying a second stream of digital information, a method for processing the first and second signals at the receiving node, including:

receiving first and second receiver inputs from the first and second antennas, respectively, due to reception of the first and second signals by the antennas; and

combining the first and second receiver inputs so as to extract at least the first stream of digital information from the receiver inputs while suppressing at least a first interference due to reception of the second signal by the first antenna.

There is additionally provided, in accordance with an embodiment of the present invention, in a wireless network, in which a transmitting node has a first antenna directed toward a first receiver positioned in a first location, and a second antenna directed toward a second receiver positioned in a second location, separated from the first location, a method for generating signals for transmission by the transmitting node, including:

receiving first and second streams of digital information to be conveyed to the first and second receivers, respectively; and

combining the first and second streams of digital information so as to generate first and second signals for transmission respectively by the first and second antennas, such that at least a first interference due to the transmission of the second signal is suppressed at the first receiver.

The present invention will be more fully understood from the following detailed description of the embodiments thereof, taken together with the drawings in which:

## BRIEF DESCRIPTION OF THE DRAWINGS

Fig. 1 is a schematic, pictorial illustration of a cellular communication network, in accordance with an embodiment of the present invention;

Fig. 2 is a schematic top view of a wireless communication network, illustrating signals transmitted and received among antennas in the network, in accordance with an embodiment of the present invention;

Fig. 3 is a block diagram that schematically shows signal processing circuitry used in the network of Fig. 2, in accordance with an embodiment of the present invention;

Fig. 4 is a block diagram that schematically illustrates receiver circuits associated with one of the antennas in a node of a wireless network (showing only the signal path associated with one of the antennas, while omitting a similar signal path associated with another antenna at the node), in accordance with an embodiment of the present invention;

Fig. 5 is a block diagram that schematically illustrates a coefficient control circuit used by a node of a wireless network for canceling interference in received signals, in accordance with an embodiment of the present invention; and

Fig. 6 is a schematic top view of a wireless mesh network, in accordance with an embodiment of the present invention.

## DETAILED DESCRIPTION OF EMBODIMENTS

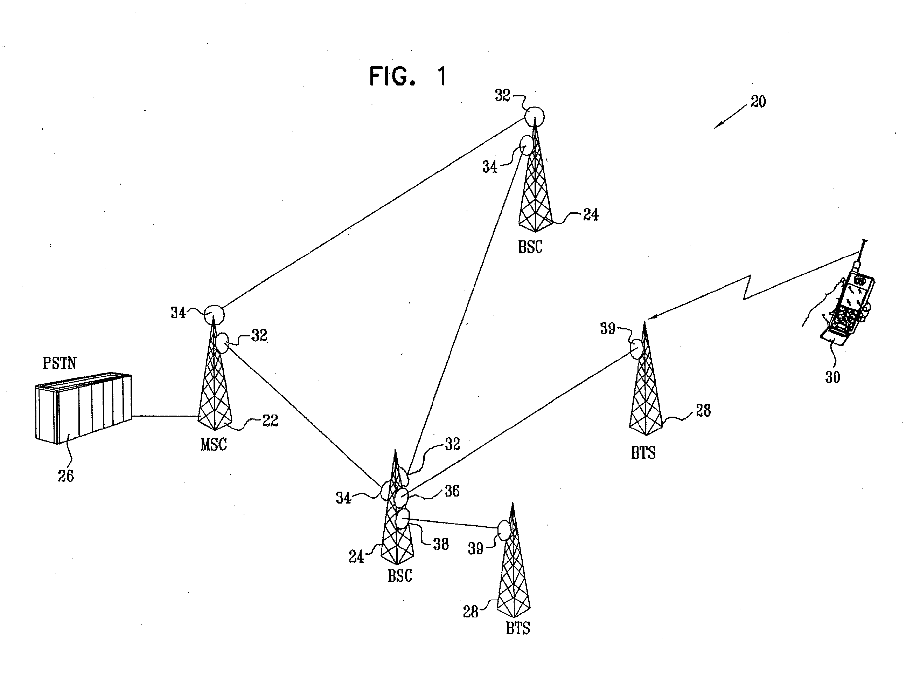

Fig. 1 is a schematic, pictorial illustration of a cellular communication network 20, in accordance with an embodiment of the present invention. Network 20 comprises a MSC 22, which is connected by wireless links to BSCs 24. The MSC and the two BSCs shown in Fig. 1 define a wireless ring network, which is used for backhaul communications between these elements of cellular network 20. Each of the nodes in this ring network (i.e., the MSC and the two BSCs) comprises an "east" antenna 32, for communicating with the next node in the counterclockwise direction around the ring, and a "west" antenna 34, for communicating with the next node in the clockwise direction. (In the context of the present patent application, the terms "east," "west," "clockwise" and "counterclockwise" are used arbitrarily, for convenience of explanation, and do not necessarily have any physical significance except for indicating different directions of communication traffic.) Each pair of an east antenna 32 on one node and a corresponding west antenna 34 on another node defines a communication link, which is typically a duplex, line-of-sight, microwave link. Alternatively, the principles of the present invention may similarly be applied to simplex links, and to radio links of other types.

MSC 22 is typically connected to a public switched telephone network (PSTN) 26. This connection is shown in the figure as a terrestrial link, typically carried by a high-speed wire or fiberoptic cable. Alternatively, MSC 22 may also be connected to PSTN 26 by a wireless link. By the same token, although the other links in network 20 are shown as wireless links, some of these links may be replaced by terrestrial wired links.

Each BSC 24 is typically connected to one or more BTSs 28, which in turn communicate with mobile units 30. In the example shown in Fig. 1, one BSC 24 is connected by wireless links in a star topology to two BTSs 28. The BSC comprises antennas 36 and 38 for communicating with antennas 39 of the BTSs. Typically (although not necessarily), the links between the BSC antennas and the BTS antennas are also duplex (FDD or TDD), line-of-sight, microwave links.

It should be understood that Fig. 1 is a highly-simplified representation of a cellular network and of certain elements in the network, which is shown here in order to exemplify topologies that are generally used in wireless backhaul networks. Although the ring and star topologies shown in the figure each include only a few nodes, larger numbers of nodes may be used in practice, and the principles of the present invention are equally applicable to larger, more complex networks.

Furthermore, although each link shown in the figures is served by only a single antenna at each end, each antenna 32, 34, 36, 38 or 39 may in practice comprise an array of antennas. The antennas in each such array may be arranged to provide desired directional characteristics and/or spatial diversity, in conjunction with suitable beam-forming circuits. The beam-forming circuits used for spatial processing on each wireless link of network 20 may be of any suitable type known in the art. Alternatively or additionally, the antenna arrays and beam-forming circuits may be adapted to enhance the capacity and reliability of links in network 20 by means of near-field spatial multiplexing, as described in U.S. Provisional Patent Application 60/356,985, filed February 13, 2002, and in PCT Patent Application PCT/IL03/00108, filed February 12, 2003. The disclosures of both of these applications are incorporated herein by reference. Because the present invention is concerned primarily with interference between different links, an antenna array that serves a single link (along with its beam-forming and spatial diversity circuits) may be regarded as a single antenna for the purpose of the description that follows.

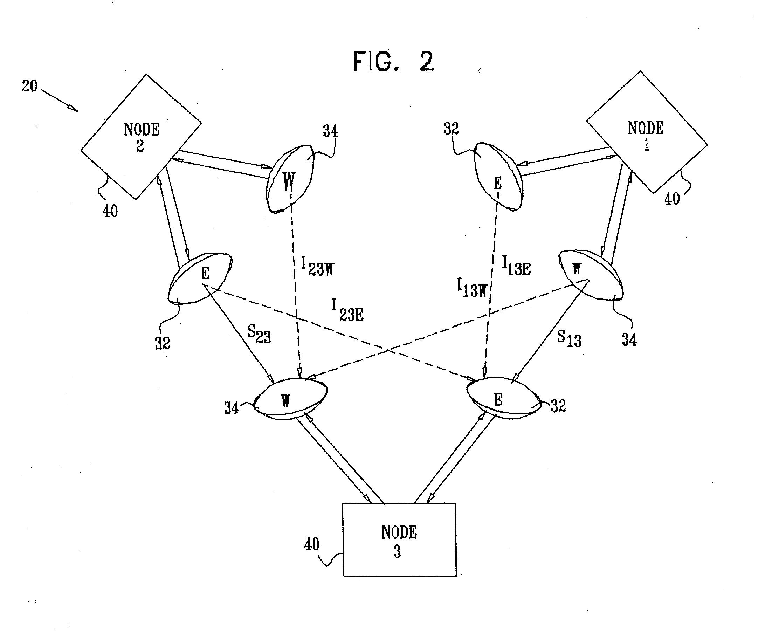

Fig. 2 is a schematic top view of a portion of a wireless communication network, such as network 20, illustrating signals transmitted among nodes 40 in this network, in accordance with an embodiment of the present invention. For example, nodes 40 shown in Fig. 2 may be connected together as a part of a ring network, in the manner of MSC 22 and BSCs 24, as shown in Fig. 1. Nodes 40 are identified for convenience in Fig. 2 as NODE 1, NODE 2 and NODE 3, and the signals received by NODE 3 are considered in this figure and in the description that follows. It is assumed, for the sake of this example, that all the antennas of NODE 1 and NODE 2 transmit signals on the same frequency channel. East antenna 32 of NODE 3 receives one desired signal, $S_{13}$, from west antenna 34 of NODE 1, while west antenna 34 of NODE 3 receives another signal $S_{23}$ from east antenna 32 NODE 2. In addition, each antenna of NODE 3 receives interfering signals: $I_{23W}$ and $I_{13W}$ at west antenna 34, and $I_{23E}$ and $I_{13E}$ at east antenna 32.

In general, a transmitting node with N antennas will transmit N-1 interfering signals to each of its neighboring receivers, which may be cancelled by signal generation circuitry in each transmitter, as described hereinbelow. In the same sense, a receiving node with M neighbors, each equipped with a transmitting interference canceller, will face M-1 interferers, which may be cancelled by signal processing circuitry in the receiver. The maximum number of interfering signals that can be canceled by a given node is determined by the number of antennas connected to the node and the number of transmitting antennas in the neighboring nodes. In practice, however, significant interfering signals are typically received only from nearby transmitting antennas whose transmitted beams cover the receiving antenna location, or whose locations fall within the angular receiving beam of the receiving antenna. Interfering signals from other antennas positions are generally too weak to affect the quality of communications on the network link in question. Therefore, in the present embodiment, some interfering signals are neglected, such as the interfering signal from west antenna 34 of NODE 2 to east antenna 32 of NODE 3, for example.

Typically, within each node 40 in network 20, the transmitter circuits associated with the different antennas (i.e., the east and west transmitters at each of NODE 1 and NODE 2 in the present example) are mutually synchronized and operate at the same frequency, i.e., they share a common oscillator and have the same symbol clock and signal generation timing. Similarly, the receivers in each node are mutually synchronized, sharing a common oscillator and sample timing. In order to use the interference suppression methods of the present invention, however, there is no need for synchronization between transceivers of different nodes. When the receiver interference cancellation capabilities are not required for canceling interferers within network 20, some of the interfering signals may even come from outside the network. Thus, a receiver with K antennas is able to suppress K-1 interferers from outside network 20 ("stranger" interferers). It is assumed in the description that follows that the signal/interference ratio at the receiver is at least sufficient to allow the receiver to acquire the signal.

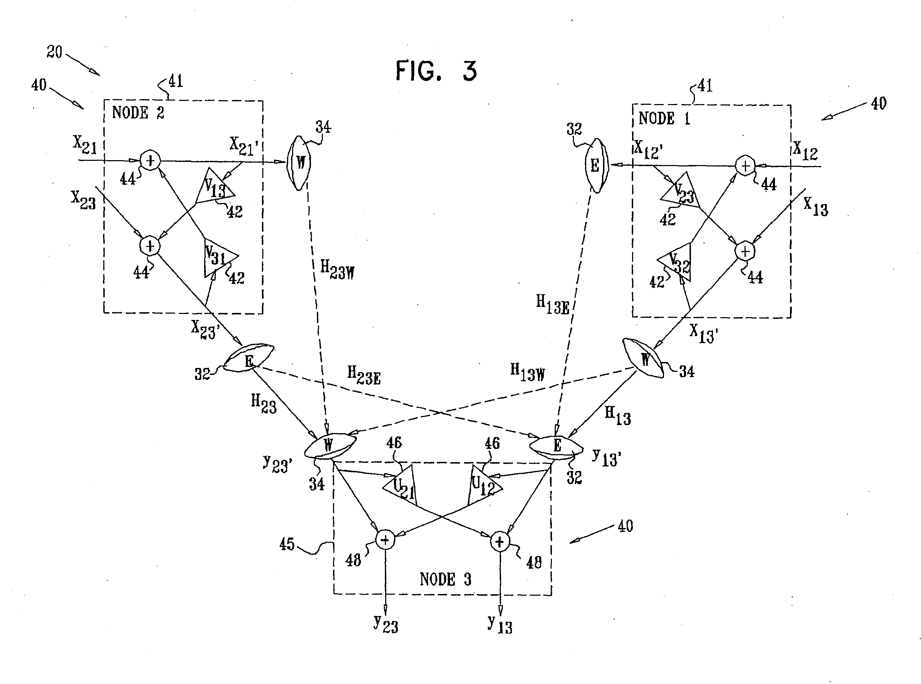

Fig. 3 is a block diagram that schematically shows signal processing elements used in the network of Fig. 2, in accordance with an embodiment of the present invention. Each of antennas 32 and 34 receives signals from multiple transmitting antennas, with amplitude and phase determined by a complex channel transfer function matrix **H,** which relates the transmitted signal vector $\underline{x}'$ and the received signal vector $\underline{y}'$. **H** can be separated into **H$_s$** for the desired signal and **H$_i$** for the interfering signals. **H$_s$** has elements $H_{ij}$, corresponding to the transfer of the desired signal, $S_{ij}$, between the transmitting and receiving antennas on each link. $H_i$ has elements $H_{ijW}$ and $H_{ijE}$ corresponding to the interferers $I_{ijW}$ and $I_{ijE}$. In the general case, $x'$ and $y'$ include all the relevant signals and interferers. In the current simplified case, the transmitted signal vector $\underline{x}'$ corresponds to the four complex signals $x_{ij}'$ transmitted by the antennas of NODE 1 and NODE 2, while the received signal vector $\underline{y}'$ corresponds to the two signals $y_{ij}'$ received by the antennas of NODE 3.

The signals and interferers are related by the expression:

$$\underline{y}' = H\underline{x}' + \underline{n} = H_s\underline{x}' + H_i\underline{x}' + \underline{n} \tag{1}$$

Here $\underline{n}$ represents the noise received at each antenna. For the present simplified example:

$$H \;=\; \begin{bmatrix} H_{13} & H_{13W} & 0 & H_{23E} \\ H_{13E} & 0 & H_{23W} & H_{23} \end{bmatrix}$$

$$H_S = \begin{bmatrix} H_{13} & 0 & 0 & 0 \\ & & \cdot & \\ 0 & 0 & 0 & H_{23} \end{bmatrix}$$

$$H_i = \begin{bmatrix} 0 & H_{13W} & 0 & H_{23E} \\ H_{13E} & 0 & H_{23W} & 0 \end{bmatrix}$$

$$\underline{x}' = [x'_{13}\ x'_{12}\ x'_{21}\ x'_{23}]^T$$

$$\underline{y}' = [y'_{13}\ y'_{23}]^T$$

The elements of **H** represent generally both amplitude attenuation and relative phase delay in propagation of signals between the particular transmitting and receiving antennas. In the simplified case shown here for NODE 3, the amplitudes of the elements of **H** are assumed to be negligible except for the following elements:

- Diagonal elements $H_{23}$ and $H_{13}$, which relate the signals $S_{23}$ and $S_{13}$, which are transmitted by east antenna 32 of NODE 2 and west antenna 34 of NODE 1, to the signals received by the west and east antennas of NODE 3, respectively.
- Off-diagonal elements $H_{23W}$ and $H_{13W}$, which relate the signals transmitted by west antennas 34 of NODE 2 and NODE 1, respectively, to the interference received by west antenna 34 of NODE 3.
- Off-diagonal elements $H_{23E}$ and $H_{13E}$, which relate the signals transmitted by east antennas 32 of NODE 2 and NODE 1, respectively, to the interference received by east antenna 32 of NODE 3.

The derivation of the elements of H and the circuitry and procedures described below for canceling interference may be extended in a straightforward way to cancel larger numbers of interferers, so long as the participating nodes have sufficient numbers of antennas for the purpose.

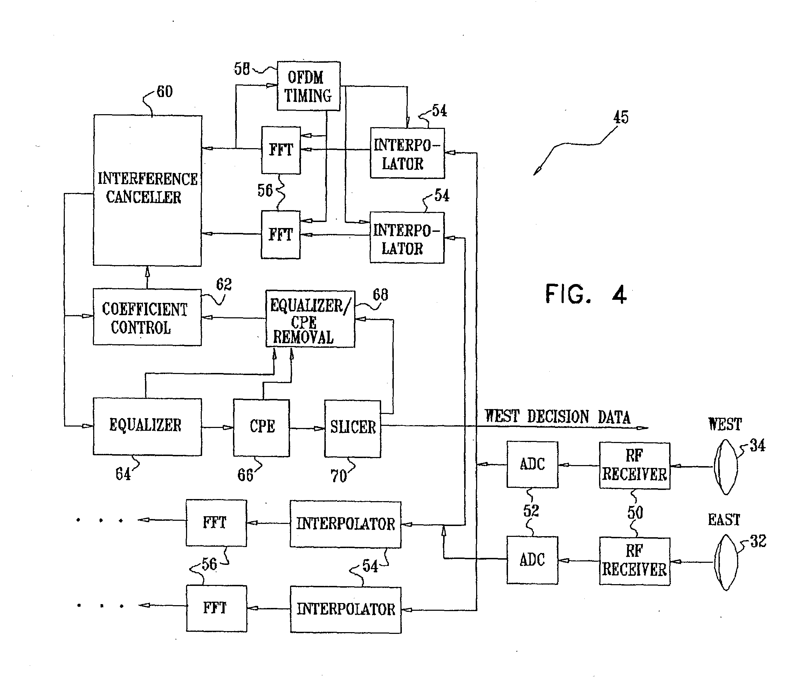

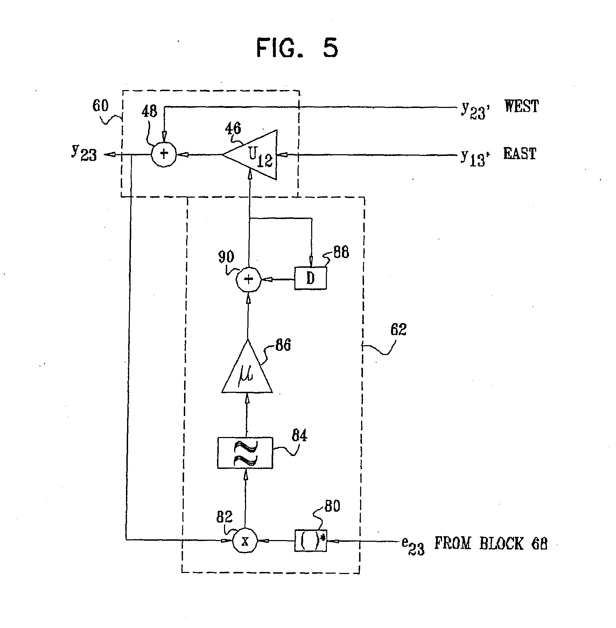

Nodes 40 comprise transmitter signal processing circuitry 41 (also referred to as signal generation circuitry) and receiver signal processing circuitry 45, whose purpose, inter alia, is to eliminate the interfering signals or, in other words, to cancel out the effect of $I_{ij}$ on the vector $\underline{y}$. In the present simplified case, circuitry 41 cancels the impact of $I_{13E}$ and $I_{23W}$ on y', while circuitry 45 cancels the impact of $I_{23E}$ and $I_{13W}$ on y'. The circuitry is shown conceptually in Fig. 3. Practical implementations will be apparent to those skilled in the art. Further details of one possible implementation of signal processing circuitry 45 are described hereinbelow with reference to Figs. 4 and 5. Typically, each node comprises both transmitter and receiver circuitry of the types shown here, but for simplicity, only the circuitry relevant to the signals received at NODE 3 is shown (i.e., transmitter circuitry 41 of NODE 1 and NODE 2 and receiver circuitry 45 of NODE 3) and described here.

Transmitter circuitry 41 applies a matrix transformation **V** to transform the input signal vector x into $\underline{x}' = \mathbf{V}\underline{x}$. In the present simplified example, $\mathbf{V} = [\mathbf{V}_1\ \mathbf{V}_2]^T$, and $\underline{x} = [x_{13}\ x_{12}\ x_{21}\ x_{23}]^T$, as defined above. Thus, for NODE 2, the input signal vector $\underline{x}_2 = (x_{21}, x_{23})$ corresponds to the data streams received by circuitry 41 for transmission to NODE 1 and NODE 3, respectively. The elements of the vector $\underline{x}'$ represent the actual physical signals to be transmitted by each of antennas 32 and 34. In the example shown here, $\mathbf{V}_2$ is a 2 x 2 diagonal matrix, whose diagonal elements are unity, and whose off-diagonal elements correct for interference due to $H_{23W}$ and $H_{13E}$. (Thus, in this example, $\mathbf{V}_2$ actually deviates slightly from being unitary, but this deviation may be neglected or may easily be corrected by normalization.) Matrix multiplication of $\underline{x}_2$ by $\mathbf{V}_2$ is represented by multiplication of $x_{21}$ and $x_{23}$ by the off-diagonal coefficients of $\mathbf{V}_2$, $V_{13}$ and $V_{31}$, in multipliers 42, followed by summation in adders 44 to give the rotated signals $x_{21}'$ and $x_{23}'$. A similar operation takes place at NODE 1. The values of the elements of **V** are typically determined in a training procedure, as described further hereinbelow.

The signals received by receiver circuitry 45 are given by $\underline{y}' = \mathbf{H}\underline{x}' + \underline{n}$. The output signal vector $\underline{y}$ is recovered

from $\underline{y}'$ by a further transformation, $\underline{y} = \mathbf{U}\underline{y}'$, which is applied by multipliers 46 and adders 48. (The noise $\underline{n}$ is ignored here, since the statistical behavior of the noise is substantially unaffected by the transformation $\mathbf{U}$, which is nearly unitary.) $\mathbf{U}$ is a 2 x 2 matrix, whose diagonal elements are unity, and whose off-diagonal coefficients correct for interference due to $H_{23E}$ and $H_{13W}$:

$$U = \begin{bmatrix} 1 & U_{12} \\ U_{21} & 1 \end{bmatrix} \qquad (2)$$

The elements of $\mathbf{U}$ may be determined adaptively, while communication traffic is transmitted over network 20, as described hereinbelow.

Fig. 4 is a block diagram that schematically illustrates a portion of receiver circuitry 45, in accordance with an embodiment of the present invention. For the sake of conceptual clarity, circuitry 45 is shown in this figure (with further details shown in Fig. 5) as being divided into certain functional blocks. The functions of these blocks may be carried out using dedicated hardware components, either off-shelf or custom, or by means of software running on a suitable programmable processor, or by a combination of hardware and software elements. In practical implementations, the functions of at least some of the blocks shown in the figure may be carried out together by a single component, while the functions of other blocks may be divided among multiple components. Appropriate implementations for different application requirements will be apparent to those skilled in the art.

The embodiment of Fig. 4 assumes that network 20 uses a multi-carrier modulation scheme (also known as a multi-tone modulation scheme), such as orthogonal frequency domain multiplexing (OFDM). Therefore, the off-diagonal coefficients $U_{21}$ and $U_{12}$ are determined and applied individually for each of the OFDM frequency sub-channels. (Only $U_{12}$ is relevant in the example shown in Fig. 4, which relates only to generation of decision data regarding the west antenna signal.) $U_{21}$ and $U_{12}$ can thus be treated simply as complex scalars, since delay spread over the wireless link between the transmitter and the receiver can be neglected within each of the sub-channels. Alternatively, for single-carrier modulation schemes, vector or other functional representations of $U_{21}$ and $U_{12}$ may be used, if necessary, in order to account for dispersion, and an appropriate tap-delay channel equalizer may be used to implement these representations. (Similarly, a tap-delay pre-equalizer may be used to perform interference cancellation in the transmitter.) Although Fig. 4 shows a frequency-domain implementation of the present invention, the interference suppression functions of the present invention may similarly be carried out in the time domain.

Signals received by antennas 32 and 34 are processed by RF receivers 50, as are known in the art, and are then converted to streams of digital samples 52 by analog/digital converters (ADC) 52. In the example shown in Fig. 3, these samples correspond to $y_{13}'$ and $y_{23}'$ coming from the east and west antennas, respectively. The samples from both antennas are then passed to separate east and west processing channels. As the east and west channels are substantially identical, only the west channel is described here. Interpolators 54 correct the east and west sample streams for clock skew, based on symbol timing extracted by a timing circuit 58. Fast Fourier Transform (FFT) processors 56 convert the interpolated samples to the frequency domain. The FFT results of the west samples are used by timing circuit 58 to determine the timing correction to be applied to interpolators 54, as well as the appropriate synchronization of FFT processors 56. The operation of interpolators 54, FFT processors 56 and timing circuit 58 is well known in the OFDM art.

The frequency-domain samples that are output by FFT processors 56 are amplitude- and phase-matched by interference canceller 60 to provide an interference-free stream of samples of the west data symbols, $y_{23}$. Canceller 60 operates on each of the frequency sub-channels of the OFDM signals individually. The values of $U_{21}$ and $U_{12}$ to be used in this operation are determined adaptively, for each sub-channel, by a coefficient controller 62, as described hereinbelow. An equalizer 64 corrects the interference free-signal for channel- and hardware-related distortion, and a common phase error (CPE) rotator 66 removes the common phase noise in each sub-channel. A slicer 70 generates decision data, providing an output data stream of data values, corresponding to the data transmitted by NODE 2. The operations of equalizer 64, rotator 66 and slicer 70 are known in the art of OFDM receivers. Some or all of these operations may be combined in a single digital filtering step along with the operation of interference canceller 60. Furthermore, elements of the processing may be performed on groups of sub-carriers, depending of the extent of delay spread of the signal.

Fig. 5 is a block diagram that schematically shows details of coefficient controller 62, along with elements of interference canceller 60, in accordance with an embodiment of the present invention. In this embodiment, the coefficient controller carries out a least-mean-square (LMS) convergence procedure in order to adaptively determine and update the coefficient $U_{12}$ that is applied by multiplier 46 in interference canceller 60. The LMS procedure is performed individually for different OFDM sub-channels (or groups of sub-channels), and Fig. 5 illustrates the LMS loop used for a single sub-channel. The LMS procedure may be carried out for every one of the sub-channels. Alternatively, the LMS procedure may be carried out only for selected sub-channels, with the coefficients of the remaining sub-channels determined by interpolation, as long as the sub-carrier to sub-carrier phase and amplitude variations are not too great. Further alternatively, other coefficient adaptation procedures, as are known in the art, may be used to determine the interference cancellation coefficients.

Coefficient controller 62 receives as its inputs the interference-canceled sample $y_{23}$ output by the interference canceller for carrier k, along with an error signal $e_{23}$ for this carrier, which is provided by an equalizer/CPE removal block 68 (shown in Fig. 4). Block 68 receives the slice error from slicer 70 (i.e., the difference between the decision output for carrier $k$ and the sample input to the slicer), and backs out the corrections previously applied by equalizer 64 and CPE rotator 66 in order to generate the error signal, by multiplication by the inverse of the complex coefficients that were applied by the equalizer and rotator. The error signal reflects the contributions of interferers to the signal received by west antenna 34 of NODE 3 from east antenna 32 of NODE 2, as given by:

$$y'_{23} = x'^{*}_{23} H_{23} + e_{23}$$

$$e_{23} \cong x'^{*}_{21} H_{23W} + x'^{*}_{13} H_{13E} \tag{3}$$

As shown in Fig. 2 and expressed in equation (3), the relevant interferers in this example are $I_{23W}$ and $I_{13W}$.

Rapid, accurate convergence of coefficient controller 62 requires that signal $S_{23}$ be correctly acquired, and that the error be small relative to the signal. During the signal acquisition phase of the links in system 20, however, slicer 70 may generate erroneous decision data, giving anomalous slice errors that can hinder convergence of the LMS loop. This problem can be avoided by methods known in the art of decision-directed adaptive filtering, such as using a reduced symbol constellation initially in order to facilitate proper signal acquisition.

The input error signal $e_{23}$ is conjugated by a conjugator 80, and is then multiplied by the sample value $y_{23}$ in a multiplier 82. The multiplication product may be filtered, by a low-pass filter 84, to remove spikes and short-term extrema that could cause loop instability. The filtered product is multiplied by a convergence coefficient $\mu$, in a multiplier 86. The choice of $\mu$ determines the convergence rate of the loop. As long as the signal/noise ratio of the input signal $y_{23}'$ is high, it is possible to use a high value of $\mu$, to give rapid convergence, without too much risk that transient noise in the input signal will cause inaccuracy in the determination of $U_{12}$. An adder 90 sums the output of multiplier 86 with the previous value of $U_{12}$, held by a delay register 88, in order to give the new value:

$$U_{12}(n + 1) = U_{12}(n) + \mu e_{23}^{*} y_{23} \tag{4}$$

The LMS procedure carried out by controller 62 effectively attenuates $e_{23}$ by reducing the correlation between $e_{23}$ and $y_{23}$. This procedure effectively removes the $x_{13}'^{*}H_{13W}$ term in $e_{23}$, but because the correlation between $x_{21}'$ $^{*}H_{23W}$ and $y_{23}$ is not dependant on $U_{12}$, it does not influence the setting of $u_{12}$. Therefore, this latter error component is substantially unaffected by interference canceller 60. Instead, the $x_{21}'^{*}H_{23W}$ error component is removed by operation of transmitter signal generation circuitry 41, as described hereinbelow.

Referring back to Fig. 3, it can be seen that $H_{23}$ and $H_{23W}$ are the respective channel transfer functions between antennas 32 and 34 of NODE 2 and antenna 34 of NODE 3. These channel transfer functions can be measured simply by transmitting training signals from NODE 2 to NODE 3 before beginning regular communication traffic between the nodes. (Training signals are normally transmitted as part of the acquisition stage in digital communication networks, and may be used for setting equalizer 64, as well.) The training procedure may also be repeated at certain intervals while network 20 is carrying normal traffic, to correct for changes in the channel transfer functions over time. Substantially any suitable known sequence of training signals can be used, as long as it allows the signals from antenna 32 and 34 to be readily differentiated. (For example, during the training sequence, while antenna 32 is transmitting a training signal on a given OFDM carrier, antenna 34 should be prevented from transmitting on the same carrier, and vice versa.) The $V_{13}$ and $V_{31}$ coefficients of multipliers 42 should be set to zero during the training procedure.

Based on the training signals received from NODE 2, NODE 3 calculates the channel transfer functions $H_{23}$ and $H_{23W}$. In order to zero out the interference contribution of $x_{21}'^{*}H_{23W}$, the coefficient $V_{13}$ is simply set to the value $V_{13} = -H_{23}/H_{23W}$. This technique is referred to as "zero forcing." The remaining transmitter coefficients are determined and set in like manner. The computation of the coefficients may be performed at NODE 3, which transmits the results back to NODE 2 by return channel transmission, as is known in the art. Alternatively, NODE 3 may simply transmit the training signal measurements to NODE 2, which then computes the coefficients. Referring back to equation (3), it can now be seen that with appropriate choice of the $U$ and $V$ coefficients, the residual error $e_{23}$ is expected to be close to zero. Although the operation of transmit circuitry 41 and receive circuitry 45 has been derived in detail only for the simple case of NODE 2 and NODE 3, the extension of this operation to larger numbers of signals and nodes is straightforward.

In the above derivation of the values of the transmit and receive coefficients, no assumptions were made as to the levels of the interferers as compared with the signals. Substantially the only requirement is that the signal level is sufficiently greater than the interferers to allow the receiver to reliably acquire the signal. Therefore, when transmit circuitry 41 and receive circuitry 45 are used in the manner described above, NODE 3 is typically able to successfully extract the signal from the interference with high signal/noise ratio, even when the levels of the interferers received at antennas 32 and 34 are nearly as high as the signal levels.

Using microwave antennas known in the art, together with circuitry 41 and 45, a few degrees of separation between the boresight angles of east and west antennas of nodes 40 is sufficient to allow the signal from one antenna to be readily acquired over interference due to other antennas. For example, for a typical directional antenna in the 23 GHz band, a separation of 3° in the boresight angles of east and west transmitting antennas will give a difference of 18 dB in the signals received by an antenna that is boresighted with the east antenna. Interference canceller can be used in this case to provide an output data stream with signal/noise ratio > 40 dB. By contrast, for the same antennas without the interference cancellation of the present invention, the boresight angles of the antennas must generally be separated by more than 40° in order to achieve this signal/noise ratio. When differential fading is present, the required separation may be even greater.

The methods of interference cancellation described above may be used to enhance frequency reuse in various different types of network topologies. For example, referring back to network 20, shown in Fig. 1, the methods of the present invention make it possible for each of the nodes in the network - MSC 22, BSCs 24 and BTSs 28 - to transmit on a single frequency from all their antennas. Since bi-directional links commonly use frequency-division duplexing (FDD), two or four frequency bands may be required to cover the entire network. In the specific case of a wireless ring network with an even number of nodes, two FDD frequency channels are sufficient to accommodate the entire network, assuming neighboring nodes transmit on different frequencies. Likewise, in an open ring (in which at least one of the links is wireline, rather than wireless), two FDD frequency channels are sufficient. For a ring network with an odd number of nodes, such as the ring defined by MSC 22 and BSCs 24, four FDD frequency channels may be required.

The methods of the present invention are also helpful in enhancing frequency reuse in star networks, such as the topology defined by BSC 24 and BTSs 28 in Fig. 1. In wireless point-to-multipoint star networks known in the art, the hub (BSC 24) has multiple sector antennas and transceivers. In such networks, each sector has one transceiver and antenna, and serves multiple users in each sector, typically by means of TDMA or CDMA in the downlink, and TDMA, CDMA or ALOHA (slotted or not) in the uplink. Either TDD or FDD schemes may be used for duplexing between the downlink and the uplink. Different sectors may use different frequencies. Other star networks known in the art are configured as multiple point-to-point links, each operating on its own frequency. The methods of the present invention, on the other hand, enable the hub to reuse the same frequency for communicating simultaneously with all the spokes, without the limitations of time or code multiplexing. Therefore, in such star networks, the present invention leads to reduced frequency consumption, while making the full bandwidth of the network available to all the spokes.

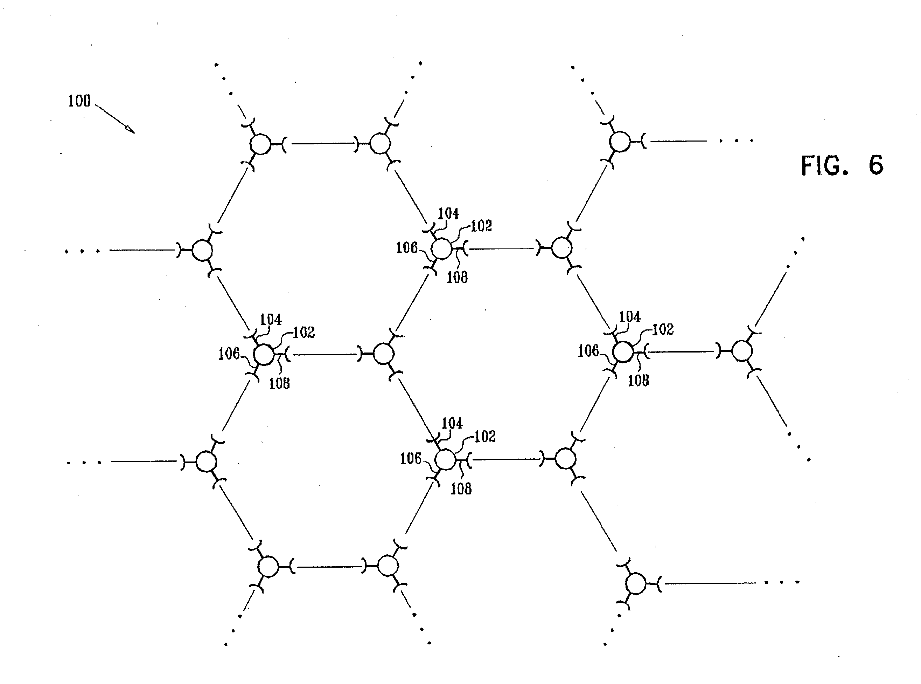

Fig. 6 is a schematic top view of a wireless mesh network 100, in accordance with another embodiment of the present invention. Each node 102 in network 100 is connected to other nodes by wireless links, using respective antennas 104, 106 and 108. In other mesh topologies, some or all of the nodes may have greater or smaller numbers of antennas and corresponding links. Using the methods described hereinabove, all the antennas in network 100 may transmit signals on the same frequency band or, alternatively, on two or four frequency bands if FDD is employed.

Although the embodiments described above make specific reference to the backhaul portion of cellular network 20, the principles of the present invention may similarly be applied to other types of wireless networks, particularly networks in which the positions of the nodes are generally fixed. Examples of such networks include "last-mile" access networks (such as Local Multipoint Distribution Service - LMDS - and Multichannel, Multipoint Distribution Systems - MMDS) and multi-tenant unit (MTU) and multi-dwelling unit (MDU) access networks, as well as wireless local area networks (WLAN). It will thus be appreciated that the embodiments described above are cited by way of example, and that the present invention is not limited to what has been particularly shown and described hereinabove. Rather, the scope of the present invention includes both combinations and subcombinations of the various features described hereinabove, as well as variations and modifications thereof which would occur to persons skilled in the art upon reading the foregoing description and which are not disclosed in the prior art.

**Claims**

1. A wireless communication network (20), comprising a plurality of nodes (40), which comprise at least first and second nodes,
   wherein each of the first and second nodes comprises a respective first antenna (32), such that the first antenna of the first node is directed to transmit a first signal toward the second node, and the first antenna of the second node is directed toward the first node so as to receive the first signal, and wherein at least the first node comprises a respective second antenna (34), which is directed toward another of the nodes in the network, and
   wherein the first node comprises signal generation circuitry (41), which is coupled to receive a first stream of digital information to be conveyed to the second node and a second stream of digital information to be conveyed to another of the nodes, and
   wherein the signal generation circuitry is adapted to combine the first and second streams of digital information so as to generate the first signal and to generate a second signal for transmission by the second antenna of the first node, such that at least a first interference due to the transmission of the second signal is suppressed at the second node.

2. The network according to claim 1, wherein the second node comprises a respective second antenna and processing circuitry (45), which is coupled to receive first and second receiver inputs from the first and second antennas of the second node, respectively, due to reception by the antennas of the second node of the first signal and of at least a third signal transmitted from another of the nodes in the network, and
   wherein the processing circuitry is adapted to combine the first and second receiver inputs so as to extract at least the first stream of digital information from the receiver inputs while suppressing at least a second interference due to reception of the third signal by the first antenna of the second node.

3. The network according to claim 2, wherein the first and second nodes are adapted to suppress at least the first and second interferences substantially without dependence on synchronization between the nodes in the network.

4. The network according to any of the preceding claims, wherein at least a first subset of the nodes are arranged in a ring topology.

5. The network according to any of the preceding claims, wherein the first node is configured to transmit the first and second signals in a common frequency channel.

6. A wireless communication network (20), comprising a plurality of nodes (40), which comprise at least first and second nodes,
   wherein each of the first and second nodes comprises a respective first antenna (32), such that the first antenna of the first node is directed to transmit a first signal carrying a first stream of digital information toward the second node, and the first antenna of the second node is directed toward the first node so as to receive the first signal, and wherein at least the second node comprises a second antenna (34), which is directed toward another of the nodes in the network, and
   wherein the second node comprises processing circuitry (45), which is coupled to receive first and second receiver inputs from the first and second antennas of the second node, respectively, due to reception by the antennas of the second node of the first signal and of at least a second signal transmitted from another of the nodes in the network, and
   wherein the processing circuitry is adapted to combine the first and second receiver inputs so as to extract at least the first stream of digital information from the receiver inputs while suppressing at least a first interference due to reception of the second signal by the first antenna of the second node.

7. The network according to claim 6, wherein the second node is adapted to suppress at least the first interference substantially without dependence on synchronization between the nodes in the network.

8. The network according to claim 6 or 7, wherein at least a first subset of the nodes are arranged in a ring topology.

9. The network according to claim 6 or 7, wherein the nodes are arranged in a mesh topology.

10. The network according to claim 6 or 7, wherein the nodes are arranged in a star topology, and wherein the second node is located at a hub of the star topology.

**11.** The network according to claim 10, wherein the processing circuitry is adapted to receive the first and second receiver inputs in accordance with a multiplexing scheme, so that multiple nodes in the network, including the first node, are served by the first antenna of the second node.

**12.** In a wireless network (20), in which a receiving node (40) has a first antenna (32) directed toward a first transmitter positioned in a first location and transmitting a first signal carrying a first stream of digital information, and a second antenna (34) directed toward a second transmitter positioned in a second location, separated from the first location, and transmitting a second signal carrying a second stream of digital information, a method for processing the first and second signals at the receiving node, comprising:

   receiving first and second receiver inputs from the first and second antennas, respectively, due to reception of the first and second signals by the antennas; and
   combining the first and second receiver inputs so as to extract at least the first stream of digital information from the receiver inputs while suppressing at least a first interference due to reception of the second signal by the first antenna.

**13.** The method according to claim 12, wherein the first and second signals are transmitted in a common frequency channel.

**14.** The method according to claim 12 or 13, wherein combining the receiver inputs further comprises extracting the second stream of digital information from the receiver inputs while suppressing a second interference due to the reception of the first signal by the second antenna.

**15.** The method according to any of claims 12-14, wherein combining the receiver inputs comprises:

   estimating an error in the extracted data stream;
   determining coefficients in response to the estimated error; and
   applying the coefficients to the first and second receiver inputs in order to suppress the interference.

**16.** The method according to claim 15, wherein determining the coefficients comprises computing the coefficients so as to minimize a mean square of the error.

**17.** The method according to claim 15 or 16, wherein determining the coefficients comprises adjusting the coefficients adaptively, in response to a change in a channel transfer function between at least one of the first and second transmitters and at least one of the first and second antennas.

**18.** The method according to any of claims 15-17, wherein the first and second signals comprise multi-carrier signals, and wherein determining the coefficients comprises dividing the first and second receiver inputs into multiple frequency components, and determining the coefficients respectively for at least some the frequency components, and wherein applying the coefficients comprises applying the coefficients individually to each of the frequency components.

**19.** The method according to any of claims 15-17, wherein the first and second signals comprises single-carrier signals, and wherein applying the coefficients comprises applying a tap-delay channel equalizer to suppress the interference.

**20.** The method according to any of claims 12-19, wherein the receiving node comprises a plurality of N antennas, including the first and second antennas, and wherein combining the first and second receiver inputs comprises combining the first and second receiver inputs with further inputs from the N antennas so as to extract the first stream of digital information while suppressing up to N-1 interferers, including the first interference.

FIG. 1

EP 1 448 006 A2

FIG. 2

EP 1 448 006 A2

FIG. 3

EP 1 448 006 A2

FIG. 4

# FIG. 5

FIG. 6